# EUROPÄISCHE PATENTANMELDUNG

(11) **EP 4 306 019 A1**
(43) Veröffentlichungstag der Anmeldung: **17.01.2024**
(21) Anmeldenummer: 22185214.8
(22) Anmeldetag: 15.07.2022
(51) Int. Cl.: A47J 43/28, A47J 43/046

(54) **HANDHABUNGSZUBEHÖRTEIL FÜR EIN KÜCHENGERÄT, SYSTEM MIT EINEM KÜCHENGERÄT UND MIT EINEM HANDHABUNGSZUBEHÖRTEIL UND VERWENDUNG EINES HANDHABUNGSZUBEHÖRTEILS ZUSAMMEN MIT EINEM KÜCHENGERÄT**

(71) Anmelder: Vorwerk & Co. Interholding GmbH, 42275 Wuppertal (DE)
(72) Erfinder: MEIER, Steffen, 44791 Bochum (DE); DÖRNER, Maria, 50674 Köln (DE); STOLZE, Svenja, 41517 Grevenbroich (DE); KRAUT-REINKOBER, Stefan, 51375 Leverkusen (DE); REIß, Simon, 51427 Bergisch Gladbach (DE)
(74) Vertreter: Cohausz & Florack

(57) **Zusammenfassung**

Die Erfindung betrifft ein Handhabungszubehörteil (2, 40, 60, 100, 130, 150, 170, 190, 214) für ein Küchengerät (212) mit einem Griffabschnitt (4, 64, 102, 132, 152, 178, 194, 224) und mit einem Arbeitsabschnitt (6, 42, 62, 104, 134, 154, 174, 192, 222), wobei der Griffabschnitt (4, 64, 102, 132, 152, 178, 194, 224) und der Arbeitsabschnitt (6, 42, 62, 104, 134, 154, 174, 192, 222) jeweils eine Längserstreckungsrichtung (A1, A2, B) aufweisen, das **dadurch gekennzeichnet ist,** dass der Griffabschnitt (4, 64, 102, 132, 152, 178, 194, 224) gegenüber dem Arbeitsabschnitt (6, 42, 62, 104, 134, 154, 174, 192, 222) in mindestens zwei unterschiedliche Arbeitspositionen (30, 32, 108, 110, 112, 114, 140, 142, 226, 248) verstellbar ist, wobei jede Arbeitsposition (30, 32, 108, 110, 112, 114, 140, 142, 226, 248) durch eine Ausrichtung der jeweiligen Längserstreckungsrichtungen (A1, A2, B) des Griffabschnittes (4, 64, 102, 132, 152, 178, 194, 224) und des Arbeitsabschnittes (6, 42, 62, 104, 134, 154, 174, 192, 222) zueinander definiert ist. Auch beschrieben sind ein System mit einem Küchengerät (212) und mit einem Handhabungszubehörteil (2, 40, 60, 100, 130, 150, 170, 190, 214), sowie eine Verwendung eines Handhabungszubehörteils (2, 40, 60, 100, 130, 150, 170, 190, 214) zusammen mit einem Küchengerät (212).

## Beschreibung

Die Erfindung betrifft ein Handhabungszubehörteil für ein Küchengerät mit einem Griffabschnitt und mit einem Arbeitsabschnitt, wobei der Griffabschnitt und der Arbeitsabschnitt jeweils eine Längserstreckungsrichtung aufweisen. Auch beschrieben sind ein System mit einem Küchengerät und mit einem Handhabungszubehörteil sowie eine Verwendung eines Handhabungszubehörteils zusammen mit einem Küchengerät.

Als Küchengeräte werden im Rahmen der vorliegenden Erfindung insbesondere Geräte verstanden, die zum Verarbeiten von rohen oder halbfertigen Lebensmittelprodukten geeignet sind. Derartige Küchengeräte weisen ein Grundgerät auf, mit dem separate Bauteile zusammenwirken, um je nach erzieltem Gericht, Getränk oder Ähnliches ein Lebensmittel zu verarbeiten. Diese Bauteile werden in der Regel durch Küchengeräteanbieter als Aufnahmegefäße, zum Beispiel als Kochgefäß, Gargefäß, oder zusätzliche Zubehörteile, zum Beispiel Deckel, Schneide- oder Rühreinheit, Aufsatz oder Ähnliches, verkauft. Im Allgemeinen weisen jeweils das Aufnahmegefäß, das Zubehörteil und das Grundgerät jeweils miteinander kompatible Schnittstellen auf, die ein Zusammenwirken ermöglichen. Insbesondere kann durch miteinander in Zusammenwirkung gebrachte Schnittstellen ein Antrieb eines beweglichen Elements des Zubehörteils durch einen in dem Grundgerät angeordneten Elektromotor erfolgen.

Ein Grundgerät im Sinne der vorliegenden Erfindung ist vorzugsweise als Basis für den Einsatz von Zubehörteilen ausgebildet, indem es eine Schnittstelle für ein Zusammenwirken mit mindestens einem Zubehörteil und/ oder mit einem Aufnahmegefäß aufweist. Das Grundgerät weist ein Gehäuse auf, in dem ein Elektromotor zum Antrieb von Zubehörteilen angeordnet ist. Der Elektromotor wirkt dann mit einem am Grundgerät eingesetzten Zubehörteil über die Schnittstelle des Grundgeräts zusammen.

Als Zubehörteil wird jedes für ein Zusammenwirken mit dem Grundgerät und/ oder mit einem Aufnahmegefäß des Küchengeräts ausgebildetes Teil verstanden. Das Zubehörteil kann mittelbar oder unmittelbar am Grundgerät einsetzbar sein, wobei für ein unmittelbares Einsetzen das Zubehörteil eine mit der Schnittstelle des Grundgeräts kompatible Schnittstelle aufweist, und wobei für ein unmittelbares Einsetzen das Zubehörteil an einem weiteren Zubehörteil angesetzt ist, das wiederum unmittelbar am Grundgerät eingesetzt ist. Der Begriff "Einsetzen" umfasst, unter anderem, die Handlungen aus der Liste: Verbinden, Koppeln, Montieren, Aufsetzen, Anbringen, Aufbringen und Ähnliches. Insbesondere ist ein Zubehörteil zur Erweiterung der Funktion des Grundgeräts ausgebildet, zum Beispiel als Schneide-, Rühr-, Koch-, Wiege-, Gar-, Dampf- oder Abdeckungseinheit. Die Funktion, für die das Zubehörteil vorgesehen ist, bezeichnet vorzugsweise den Zubehörteiltyp.

Zunehmend werden in der Küche Küchengeräte eingesetzt, die dem Nutzer beim Zubereiten von Lebensmitteln helfen sollen, wie zum Beispiel beim Rühren, Kochen, Backen, Vermengen, Zerschneiden, Zerkleinern oder Ähnlichem. Hierbei werden Lebensmitteln in unterschiedlichen Zuständen verwendet, also flüssig, fest, zähflüssig usw. Gleichzeitig weisen die Küchengeräte Aufnahmegefäße und/oder Zubehörteile auf, die ein Herausnehmen der verarbeiteten Lebensmittel teilweise erschweren. Ein Beispiel hierfür ist ein Messereinsatz mit scharfen Klingen im Bodenbereich eines tiefen Kochgefäßes: in diesem Fall ist ein Herausnehmen zerkleinerter Lebensmitteleinzelstücke per Hand gefährlich und mit einem klassischen Löffel können diese nur teilweise erreicht werden. Ein weiteres Beispiel ist das Entfernen von Teigresten aus einem Rühreinsatz in einem Rührtopf, und gleichzeitig von den Wänden des Rührtopfes.

Bekannte Küchengeräte werden teilweise mit einem an die Formgebung ihrer Aufnahmegefäße angepassten Handhabungszubehörteil, wie zum Beispiel ein Spatel, verkauft. Dabei ist die Formgebung des Handhabungszubehörteils, je nach Aufnahmegefäß, beliebig komplex. Außerdem vervielfacht sich die Komplexität mit der Anzahl an unterschiedlichen Zubehörteilen oder Aufnahmegefäßen, mit denen es zusammen verwendbar sein soll. Insgesamt sind bekannte Handhabungszubehörteile komplex in der Herstellung und ermöglichen einen oft nur teilweise befriedigenden Einsatz.

Außerdem befinden sich gleichzeitig gebrauchte, also teilweise veraltete Modelle und aktuelle, moderne Modelle auf dem Markt, wofür jeweils spezifisch ein Handhabungszubehörteil vorgesehen ist. Aus Kosten- und Umweltschutzgründen geht der Trend dahingehend, dass dedizierte, nur für ein spezifisches Modell einsetzbare Zubehörteile zu vermeiden sind.

Vor diesem Hintergrund liegt der vorliegenden Erfindung die Aufgabe zu Grunde, bekannte Handhabungszubehörteile zu verbessern, insbesondere die Nutzerfreundlichkeit und die Kompatibilität mit Küchengeräten zugleich zu erhöhen.

Diese Aufgabe wird gemäß einer ersten Lehre mit einem Handhabungszubehörteil für ein Küchengerät mit einem Griffabschnitt und mit einem Arbeitsabschnitt, wobei der Griffabschnitt und der Arbeitsabschnitt jeweils eine Längserstreckungsrichtung aufweisen, dadurch gelöst, dass der Griffabschnitt gegenüber dem Arbeitsabschnitt in mindestens zwei unterschiedlichen Arbeitspositionen verstellbar ist, wobei jede Arbeitsposition durch eine Ausrichtung der jeweiligen Längserstreckungsrichtungen des Griffabschnittes und des Arbeitsabschnittes zueinander definiert ist.

So können je nach eingestellter Arbeitsposition mit demselben Handhabungszubehörteil unterschiedliche Funktionen erreicht werden. Insbesondere ermöglicht ein Verstellen des Griffabschnittes gegenüber dem Arbeitsabschnitt einen optimalen Einsatz des Handhabungszubehörteils zusammen mit unterschiedlichen Aufnahmegefäßen oder Zubehörteilen eines Küchengerätes. Ein derartiges Handhabungszubehörteil kann zum Beispiel in einer ersten Arbeitsposition zusammen mit einem flachen Aufnahmegefäß und in einer weiteren Arbeitsposition mit einem tiefen Aufnahmegefäß verwendet werden, und jedes Mal ein optimales Einsatzergebnis gewährleisten.

Darüber hinaus wird mit der Verstellbarkeit des Handhabungszubehörteils eine erhöhte Kompatibilität mit vergangenen, aktuellen und ggf. zukünftigen Küchengerätemodellen erreicht. Außerdem können mit dem vorgeschlagenen Handhabungszubehörteil unterschiedliche Funktionen in einem einzigen Gegenstand zusammengeführt und sowohl Platz als auch Material und Kosten gespart werden.

Als Handhabungszubehörteil wird ein Zubehörteil für ein Küchengerät verstanden, das sich für ein Handhaben eines Lebensmittels in Zusammenhang mit dem Küchengerät eignet. So kann ein Handhabungszubehörteil zum Beispiel zum händischen Vermischen oder Herausnehmen eines Lebensmittels aus einem Aufnahmegefäß eines Küchengerätes vorgesehen sein. Alternativ oder zusätzlich kann das Handhabungszubehörteil zum Handhaben eines Aufnahmegefäßes und/oder eines Zubehörteils eines Küchengerätes ausgebildet sein. Vorzugsweise wird das Handhabungszubehörteil vom Küchengerätehersteller oder von einem Drittanbieter für Zubehörteile, die für dieses Küchengerät vorgesehen sind, zur Verfügung gestellt.

Das Handhabungszubehörteil weist einen Griffabschnitt und einen Arbeitsabschnitt auf. Der Griffabschnitt ist für ein Greifen durch einen Nutzer ausgebildet und weist vorzugsweise eine für eine Hand ergonomische Formgebung auf. Der Griffabschnitt kann eine Formgebung aufweisen, die eine Verbindung mit einem Aufnahmegefäß und/oder mit einem Zubehörteil eines Küchengeräts ermöglicht, um ein Handhaben des Aufnahmegefäßes und/oder des Zubehörteils zu gewährleisten.

Der Arbeitsabschnitt ist für ein Handhaben eines Lebensmittels ausgebildet. Besonders bevorzugt ist ein Arbeitsabschnitt, dessen Formgebung an die Formgebung eines Aufnahmegefäßes und/oder eines Zubehörteils eines Küchengeräts zumindest teilweise angepasst ist. Der Arbeitsabschnitt kann, alternativ oder zusätzlich, an einen Lebensmittelzustand angepasst sein, beispielsweise mit einer Formgebung, die sich für ein Handhaben von flüssigen oder zähflüssigen Lebensmitteln eignet.

Der Griffabschnitt und der Arbeitsabschnitt können unterschiedliche Materialien aufweisen, die beispielsweise eine besonders gute Haptik oder eine besonders gute Lebensmittelverträglichkeit aufweisen.

Außerdem weisen der Griffabschnitt und der Arbeitsabschnitt jeweils eine Längserstreckungsrichtung auf, anhand deren die unterschiedlichen Arbeitspositionen definiert sind. Insbesondere wird eine Arbeitsposition durch den Winkel, den die jeweiligen Längserstreckungsrichtungen relativ zu einander bilden, definiert.

So kann zum Beispiel ein Übereinstimmen bzw. eine parallele Stellung der beiden Längserstreckungsrichtungen eine erste Arbeitsposition definieren, bei der das Handhabungszubehörteil für ein Abschaben von Lebensmittelresten an der inneren Wandung eines tiefen Aufnahmegefäßes am besten geeignet ist. Wird in einem weiteren Beispiel das Handhabungszubehörteil derart eingestellt, dass die Längserstreckungsrichtung des Arbeitsabschnittes senkrecht zur Längserstreckungsrichtung des Griffabschnittes angeordnet ist, dann können Lebensmittelreste optimal an der Innenwandung eines flachen Aufnahmegefäßes abgeschabt werden.

Mit dem Begriff "Verstellen" werden alle Handlungen verstanden, die einen Übergang von einer ersten Arbeitsposition in eine weitere Arbeitsposition bewirken. Beispiele hierfür sind ein Einstecken des Griffabschnittes am Arbeitsabschnitt an unterschiedlichen Einsteckverbindungen oder ein Schwenken des Griffabschnittes relativ zum Arbeitsabschnitt. Darüber hinaus kann ein Verstellen im Sinne der vorliegenden Erfindung durch Bewegen eines wesentlichen Teils des Griffabschnittes relativ zum Arbeitsabschnitt, wobei ein nicht wesentliches Teil des Griffabschnittes unverändert am Arbeitsabschnitt verbleibt. Eine solche Konstellation ist beispielweise beim Vorsehen eines Gelenks am Griffabschnitt verwirklicht, wobei ein Teil des Griffabschnittes am Arbeitsabschnitt befestigt ist.

Bei einer ersten Ausführungsform des Handhabungszubehörteils sind der Griffabschnitt und der Arbeitsabschnitt lösbar miteinander verbindbar.

Ein derartig ausgebildetes Handhabungszubehörteil ermöglicht ein leichtes Verstellen in unterschiedlichen Arbeitspositionen und auch ein vereinfachtes Reinigen beider Abschnitte. Darüber hinaus kann mit einer derartigen Ausbildung der Arbeitsabschnitt ausgetauscht werden, zum Beispiel durch einen neuen Arbeitsabschnitt oder durch einen Arbeitsabschnitt mit einer unterschiedlichen Formgebung. Dadurch werden insgesamt sowohl die Lebensdauer des Handhabungszubehörteils und die Anzahl an Einsatzmöglichkeiten erweitert.

Hierzu kann zum Bespiel ein Bajonettverschluss, ein Einstecksystem, ein Einrastsystem, ein Schraubsystem oder Ähnliches vorgesehen sein, so dass einerseits ein manuelles Verstellen und andererseits ein sicheres Verbinden möglich sind.

Vorzugsweise sind der Griffabschnitt und der Arbeitsabschnitt in einer Arbeitsposition derart miteinander verbunden, dass ein bestimmungsgemäßes Handhaben eines Lebensmittels kein Lösen des Arbeitsabschnittes vom Griffabschnitt bewirkt.

Bei einer weiteren Ausführungsform des Handhabungszubehörteils sind der Griffabschnitt und der Arbeitsabschnitt schwenkbar miteinander verbunden, und / oder der Griffabschnitt weist mindestens einen Gelenkabschnitt auf.

Bei einer Ausbildung des Handhabungszubehörteils mit einem Griffabschnitt und einem Arbeitsabschnitt, die sowohl lösbar als auch schwenkbar miteinander lösbar verbunden sind, wird die Anzahl an möglichen Arbeitspositionen und entsprechenden Einsatzmöglichkeiten vervielfacht.

Ein Ausbilden des Arbeitsanschnittes mit einem Gelenkabschnitt ermöglicht, wie auch eine schwenkbare Verbindung des Arbeitsabschnittes mit dem Griffabschnitt, ein Verstellen der Hauptlängserstreckungsrichtung mindestens eines Bereichs des Griffabschnittes zur Längserstreckungsrichtung des Arbeitsabschnittes.

Beispielweise kann der Griffabschnitt in mehrere Bereiche unterteilt sein, die durch Gelenk- oder Schwenkverbindungen miteinander verbunden sind. Vorzugsweise ist an den Gelenk - oder Schwenkverbindungen jeweils eine Arretierung vorgesehen, um bei der Benutzung und nach Einstellen der gewünschten Arbeitsposition den Griffabschnitt entsprechend festzuhalten.

Bei einer weiteren Ausführungsform des Handhabungszubehörteils weist der Arbeitsabschnitt eine Vertiefung auf, wobei die Vertiefung an einer Außenseite des Arbeitsabschnittes im Wesentlichen zentriert angeordnet ist.

Mit der Vertiefung kann ein flüssiges oder zähflüssiges Lebensmittel einfacher aufgehoben bzw. aufgenommen werden. Durch die mittige Anordnung der Vertiefung kann dies unabhängig von der Arbeitsposition, in der das Handhabungszubehörteil eingestellt ist, gewährleistet werden.

Vorzugsweise weist der Arbeitsabschnitt zwei sich gegenüber liegenden Außenseiten auf, die zusammen einen im Wesentlichen planen, eine bestimmte Dicke aufweisenden Bereich definieren. Die Vertiefung kann eine Tiefe aufweisen, die geringer als die Dicke des planen Bereichs ist, so dass die eine Außenseite einen planen, die Vertiefung umgebenden Bereich aufweist, und die andere Außenseite im Wesentlichen plan ist. Alternativ kann die Vertiefung eine Tiefe aufweisen, die höher ist als die Dicke des planen Bereichs, so dass die eine Außenseite einen planen, die Vertiefung umgebenden Bereich aufweist, und die andere Außenseite eine der Vertiefung entsprechende Wölbung und einen die Wölbung umgebenden Bereich aufweist. In Abhängigkeit von der Tiefe der Vertiefung kann ein flüssiges Lebensmittel mehr oder weniger einfach aufgenommen werden und zum Beispiel aus einem Aufnahmegefäß eines Küchengeräts herausgenommen werden.

Bei einer weiteren Ausführungsform des Handhabungszubehörteils weist der Arbeitsabschnitt eine Vertiefung auf, wobei die Vertiefung an einer Außenseite des Arbeitsabschnittes im Wesentlichen exzentrisch angeordnet ist.

Somit kann in Abhängigkeit der ausgewählten Arbeitsposition eine verbesserte Aufnahme von Lebensmitteln erreicht werden. Insbesondere kann ein derart ausgebildetes Handhabungszubehörteil an das Verhalten eines links- oder rechts händischen Nutzers besonders einfach angepasst werden.

Außerdem können am Arbeitsabschnitt mehrere Vertiefungen vorgesehen sein, die zusammen an einer selben Außenseite des Arbeitsabschnittes angeordnet sind, oder alternativ jeweils an unterschiedlichen Außenseiten des Arbeitsabschnittes. So können an einer ersten Außenseite eine erste, zentriete Vertiefung und an einer weiteren Außenseite eine weitere, exzentrisch angeordnete Vertiefung vorgesehen sein. Derart können je nach Nutzungsrichtung des Handhabungszubehörteils bzw. je nach Außenseite, die in Benutzung nach vorne in die Bewegungsrichtung gerichtet wird, unterschiedliche Funktionen erreicht werden.

Bei einer weiteren Ausführungsform des Handhabungszubehörteils weist der Arbeitsabschnitt mindestens zwei Bereiche auf, die sich durch deren jeweilige Elastizitätseigenschaften unterscheiden.

Dadurch können insbesondere unterschiedliche Kanten und / oder Seiten des Arbeitsabschnittes unterschiedlich hart ausgebildet und so je nach eingestellter Arbeitsposition Lebensmitteln von einer Wandung eines Aufnahmegefäßes abgeschabt, oder in Abhängigkeit von der Empfindlichkeit eines Aufnahmegefäßes, beispielsweise aus Stahl oder mit einer Teflon^{®}-Beschichtung, schonend eingesetzt werden.

Unterschiedliche Elastizitätseigenschaften oder -module können durch unterschiedliche mechanische Ausgestaltungen und/oder durch unterschiedliche Materialien erreicht sein. Beispielweise kann der Arbeitsabschnitt teilweise mechanisch bzw. strukturell gestützt sein und/oder unterschiedliche Materialbereiche aufweisen.

Bei einer weiteren Ausführungsform des Handhabungszubehörteils weist der Arbeitsabschnitt mindestens eine Außenkante auf, ein Bereich mit einem ersten Elastizitätsmodul ist an der mindestens einen Außenkante angeordnet, und ein Bereich mit einem weiteren ersten Elastizitätsmodul ist fern von der mindestens einen Außenkante angeordnet, wobei der erste Elastizitätsmodul geringer als der weitere Elastizitätsmodul ist.

Somit kann der Arbeitsabschnitt gezielt für einen Einsatz in Zusammenhang mit einem bestimmten Aufnahmegefäß und/ öder Zubehörteil eines Küchengeräts ausgebildet sein. So können zum Beispiel eine Außenkante mit einem weichen Material und der Kern des Arbeitsanschnittes mit einem steiferen Material ausgebildet sein, um ein Lebensmittel besonders effizient von einer glatten Fläche abzuschaben und gleichzeitig die gesamte Formstabilität bzw. Resilienz des Handhabungszubehörteils zu gewährleisten.

Bei einer weiteren Ausführungsform des Handhabungszubehörteils ist die Anordnung am Arbeitsabschnitt der mindestens zwei Bereiche in Abhängigkeit von einer Arbeitsposition des Griffabschnittes und des Arbeitsabschnittes ausgewählt.

Dadurch kann das Handhabungszubehörteil in eine Arbeitsposition eingestellt werden, die für einen bestimmten Einsatz gezielt optimiert ist, zum Beispiel für einen Einsatz in Zusammenhang mit bestimmten Aufnahmegefäßen und/oder Zubehörteilen eines Küchengeräts. Dies ist besonders Vorteilhaft, wenn ein Küchengerät unterschiedliche Aufnahmegefäße und Zubehörteile hat, denn ein und dasselbe Handhabungszubehörteil kann für jedes dieser Aufnahmegefäße und Zubehörteile nur durch Verstellen in die entsprechende Arbeitsposition mit optimalen Nutzungsergebnis verwendet werden.

Vorzugsweise sind die Arbeitspositionen im Vorfeld, insbesondere Seitens des Handhabungszubehörteilherstellers in Abhängigkeit der Formgebung, der Materialien und/oder der bestimmungsgemäß zu verarbeitenden Lebensmitteln vorgesehen und die Bereiche mit unterschiedlichen Elastizitätsmodulen entsprechend platziert bzw. am Arbeitsabschnitt angeordnet.

Bei einer weiteren Ausführungsform des Handhabungszubehörteils weist der Arbeitsabschnitt einen ersten Bereich mit einem ersten Elastizitätsmodul und einen weiteren Bereich mit einem weiteren, im Vergleich zum ersten Elastizitätsmodul höheren Elastizitätsmodul auf. Außerdem ist in einer vorbestimmten Arbeitsposition der erste Bereich an einem dem Griffabschnitt gegenüberliegenden distalen Ende des Arbeitsabschnittes angeordnet.

So können zum Beispiel Lebensmittelreste, ein Teig, eine Sauce am Boden eines Aufnahmegefäßes gut erreicht und abgeschabt, aufgehoben werden. Oft ist der Bereich des Arbeitsabschnittes, der an dem Griffabschnitt gegenüberliegenden distalen Ende des Arbeitsabschnittes angeordnet ist, derjenige Bereich, der die Funktion des Handhabungszubehörteils hauptsächlich mitbestimmt. Dementsprechend kann durch Auswahl des Materials bzw. des Elastizitätsmoduls für diesen Bereich einer Arbeitsposition eine Funktion verliehen werden.

Darüber hinaus steigert diese Ausführungsform die Nutzerfreundlichkeit des Handhabungszubehörteils, in dem für einen Nutzer intuitiv ist, die Arbeitsposition in Abhängigkeit der Anordnung der Bereiche am Arbeitsabschnitt, die eine gewünschte Elastizität haben, einzustellen.

Bei einer weiteren Ausführungsform des Handhabungszubehörteils weist der Arbeitsabschnitt zumindest teilweise ein Material auf, dessen Farbgebung temperaturabhängig ist.

Auch diese Ausführungsform steigert die Nutzerfreundlichkeit und sogar auch die Benutzungssicherheit des Handhabungszubehörteils, denn durch in Kontaktbringen des Arbeitsabschnittes mit einem Aufnahmegefäß oder mit einem Lebensmittel kann bestimmt werden, ob dieses heiß, kalt oder lauwarm ist, ohne mit der Haut die Temperatur zu überprüfen.

Bei einer weiteren Ausführungsform des Handhabungszubehörteils ist mindestens eine Außenkante des Arbeitsabschnittes in Queransicht und über Ihre Gesamtlänge zumindest teilweise abgestuft. Derart weist der Arbeitsabschnitt mindestens eine Außenkante mit einem Lippenartigen Profil auf. Ist der Bereich dieser Außenkante aus einem Material mit einem relativ hohen Elastizitätsmodul ausgebildet, dann kann eine optimale Anpassung des Arbeitsabschnitts an die Form eines Aufnahmegefäßes und/oder eines Zubehörteils eines Küchengeräts gewährleistet werden.

Alternativ oder zusätzlich ist mindestens eine Außenkante des Arbeitsabschnittes in Queransicht und über Ihre Gesamtlänge zumindest teilweise stufenlos ausgebildet, so dass zwei sich gegenüberliegenden Außenseiten des Arbeitsabschnittes stufenlos zusammenlaufen.

Das Handhabungszubehörteil und insbesondere dessen Arbeitsabschnitt können spiegelsymmetrisch ausgebildet sein, und so eine erhöhte Nutzerfreundlichkeit sowohl für Links- als auch für Rechtshänder gleichermaßen anbieten.

Auch vorstellbar ist eine Ausbildung des Griffabschnittes mit einem Verbindungselement an einem seiner distalen Enden, wobei das Verbindungselement für eine Verbindung mit einem Aufnahmegefäß oder mit einem Zubehörteil eines Küchengeräts vorgesehen ist. Somit kann der Griffabschnitt des Handhabungszubehörteils als Griff für das Aufnahmegefäß oder für das Zubehörteil verwendet werden.

Die oben genannte Aufgabe ist auch gemäß der ersten Lehre mit einem System mit einem Küchengerät und mit einem Handhabungszubehörteil nach einer der beschriebenen Ausführungsformen dadurch gelöst, dass die Arbeitspositionen, in denen das Handhabungszubehörteil einstellbar ist, jeweils für mindestens eine Funktion des Küchengerätes vorgesehen sind, wobei eine Funktion des Küchengerätes anhand eines Bauteils des Küchengerätes, eines Zubehörteils des Küchengerätes und/oder eines vorbestimmten Vorgangs am Küchengerät definiert ist.

Durch Berücksichtigen der Eigenschaften eines Aufnahmegefäßes, eines Zubehörteils und/oder eines bestimmten Vorgangs am Küchengerät bei der Konzeption eines Handhabungszubehörteils können Lebensmittel einfacher aus dem Küchengerät herausgenommen werden. Insbesondere ist das Vorsehen einer bestimmten Arbeitsposition spezifisch für eine Konstellation Aufnahmegefäß + Zubehörteil von Vorteil, um ein optimales Benutzungsergebnis zu gewährleisten.

Bei einer ersten Ausführungsform des Systems ist die Formgebung des Arbeitsabschnittes des Handhabungszubehörteils zumindest teilweise an die Formgebung eines Aufnahmegefäßes des Küchengeräts angepasst.

Somit kann ein Lebensmittel optimal zum Beispiel vom Boden oder von der Innenwand des Aufnahmegefäßes entfernt werden. Vorzugsweise weist der Arbeitsabschnitt mehrere Außenflächen auf, die jeweils an einem Bereich der Formgebung eines Aufnahmegefäßes angepasst sind, oder die jeweils an die Formgebung unterschiedlich ausgebildeter Aufnahmegefäße angepasst sind. Somit werden die Einsatzmöglichkeiten des Handhabungszubehörteils vervielfältigt.

Bei einer weiteren Ausführungsform des Systems ist ein Innenraum des Küchengeräts anteilig jeweils durch eine Innenfläche eines Aufnahmegefäßes und durch eine Außenfläche eines Zubehörteils ausgebildet und die Formgebung des Arbeitsabschnittes des Handhabungszubehörteils ist zumindest teilweise an die Formgebung des Innenraums angepasst.

Ein derart ausgebildetes System ermöglicht ein Erreichen von Lebensmitteln in sonst schwer zu erreichenden Stellen des Küchengeräts. Für die Zwecke, deren Funktion beispielsweise Schneiden, Zerkleinern oder Ähnliches sind, sind Zubehörteile so ausgebildet, dass Lebensmittel nach Zubereitung unterhalb einer Klinge oder eines Rührarms in einem tief ausgebildeten Aufnahmegefäß angeordnet sind. Mit den beschriebenen, an diese Konstellation spezifisch angepassten Arbeitspositionen des Handhabungszubehörteils, können diese Lebensmittel einfach und effizient aus dem Küchengerät bzw. aus dem Aufnahmegefäß herausgenommen werden. Insgesamt wird somit Lebensmittelverschwendungen vermieden und das Küchengerät ist dann einfacher zu reinigen.

Die oben genannte Aufgabe ist auch mit einer Verwendung eines Handhabungszubehörteils nach einer der beschriebenen Ausführungsformen zusammen mit einem Küchengerät dadurch gelöst, dass für die Durchführung eines Lebensmittelzubereitungsvorgangs am Küchengerät die Arbeitsposition des Handhabungszubehörteils an eine Funktion des Küchengerätes angepasst wird.

Diese Verwendung bietet dieselben Vorteile, wie das Handhabungszubehörteil und das System.

### ##Schutzansprüche für die Nachanmeldung eines Gebrauchsmusters ##

Die oben genannte, der Erfindung zugrunde legende Aufgabe wird gemäß einer zweiten Lehre mit einem Handhabungszubehörteil für ein Küchengerät mit einem Griffabschnitt und mit einem Arbeitsabschnitt, wobei der Arbeitsabschnitt zwei sich gegenüberliegenden, mit einem bestimmten Abstand d voneinander beabstandeten Außenseiten aufweist, dadurch gelöst, dass der Arbeitsabschnitt an einer ersten der zwei Außenseiten eine Vertiefung mit einer Tiefe T aufweist, und dass die Tiefe T der Vertiefung gleich oder höher ist, als der Abstand d zwischen den sich gegenüberliegenden Außenseiten des Arbeitsabschnittes.

Dieses Handhabungszubehörteil weist gleichzeitig die Funktion einer Kelle zur Handhabung von Flüssigkeiten und die Funktion von Spatel bzw. Schaber auf. Insbesondere ist die Vertiefung tiefer, als der Randbereich um die Vertiefung herum dick ist. Somit soll ein sicheres Handhaben von Flüssigkeiten erreicht werden.

Das Handhabungszubehörteil gemäß der zweiten Lehre kann durch folgende, miteinander einzeln oder zusammen beliebig kombinierbare Merkmale gekennzeichnet sein:
- dass die Vertiefung an der einen Außenseite des Arbeitsabschnittes im Wesentlichen zentriert angeordnet ist;
- dass die Vertiefung an der einen Außenseite des Arbeitsabschnittes im Wesentlichen exzentrisch angeordnet ist;
- dass der Arbeitsabschnitt mindestens zwei Bereiche aufweist, die sich durch deren jeweiligen Elastizitätseigenschaften unterscheiden;
- dass der Arbeitsabschnitt mindestens eine Außenkante aufweist,
- dass ein Bereich mit einem ersten Elastizitätsmodul an der mindestens einen Außenkante angeordnet ist, und
- dass ein Bereich mit einem weiteren ersten Elastizitätsmodul fern von der mindestens einen Außenkante angeordnet ist,
- wobei der erste Elastizitätsmodul geringer als der weitere Elastizitätsmodul ist;
   dass mindestens eine Außenkante des Arbeitsabschnittes in Queransicht und über Ihre Gesamtlänge zumindest teilweise abgestuft ist;
   dass der Arbeitsabschnitt zumindest teilweise ein Material aufweist, dessen Farbgebung temperaturabhängig ist.

Diese Merkmale erwirken dieselben Vorteile, wie die korrespondierenden Merkmale der Ausführungsformen des Handhabungsteils gemäß der ersten Lehre.

Bei einer Ausführungsform des Handhabungszubehörteils bilden die sich gegenüberliegenden Außenseiten einen im Wesentlichen planen Bereich des Arbeitsabschnittes, wobei dieser Bereich zumindest teilweise einen ersten Elastizitätsmodul und der der Vertiefung entsprechende Bereich des Arbeitsabschnittes einen weiteren Elastizitätsmodul aufweisen, wobei der erste Elastizitätsmodul höher ist als der weitere Elastizitätsmodul.

Der Arbeitsabschnitt eines derartigen Handhabungszubehörteils kann einen planen, relativ weichen Randbereich und einen vertieften, relativ harten mittleren Bereich aufweisen. Durch den mittleren Bereich kann ein flüssiges Lebensmittel einfach und sicher aus einem Aufnahmegefäß herausgenommen werden, während der weiche Randbereich ein Abschaben von der Innenwand des Aufnahmegefäßes erlaubt.

Bei einer Ausführungsform des Handhabungszubehörteils ist ein Abdeckungselement vorgesehen, wobei das Abdeckungselement von einer ersten Position in eine Abdeckungsposition verlagert werden kann, wobei das Abdeckungselement in der Abdeckungsposition die Vertiefung derart abdeckt, dass die Vertiefung und das Abdeckungselement zusammen einen geschlossenen Aufnahmeraum bilden, und wobei in der ersten Position die Vertiefung durch das Abdeckungselement zumindest teilweise freigelegt ist.

Diese Ausführungsform wird insbesondere durch ein Schieberelement verwirklicht, dessen Größe eine Abdeckung der Vertiefung ermöglicht, und das über die Vertiefung verschiebbar ist.

Die oben genannte, der Erfindung zugrunde legende Aufgabe wird gemäß der zweiten Lehre auch mit einem System mit einem Küchengerät und mit einem Handhabungszubehörteil entsprechend der zweiten Lehre, **dadurch gelöst,** dass die Formgebung des Arbeitsabschnittes des Handhabungszubehörteils zumindest teilweise an die Formgebung eines Aufnahmegefäßes des Küchengeräts angepasst ist.

Dementsprechend kann das Handhabungszubehörteil optimal in Zusammenhang mit dem Küchengerät desselben Systems verwendet und gleichzeitig die Handhabung von nicht festen Lebensmitteln in dem Küchengerät verbessert werden.

Bei einer Ausführungsform des Systems ist ein Innenraum des Küchengeräts anteilig jeweils durch eine Innenfläche eines Aufnahmegefäßes und durch eine Außenfläche eines Zubehörteils ausgebildet und die Formgebung des Arbeitsabschnittes des Handhabungszubehörteils ist zumindest teilweise an die Formgebung des Innenraums angepasst.

Somit kann die Anpassung des Handhabungszubehörteils an das Küchengerät weiter optimiert und entsprechend auch die Nutzerfreundlichkeit verbessert werden.

Die oben beschriebenen Ausführungsformen des Handhabungszubehörteils, des Systems und der Verwendung der ersten und der zweiten Lehren sind einzeln oder zusammen beliebig miteinander kombinierbar. Insgesamt sind hiermit alle Kombinationen aus einzelnen oder mehreren der einzelnen beschriebenen Ausführungsformen offenbart.

Weitere Merkmale und Vorteile des Handhabungszubehörteils, des Systems und der Verwendung können der nachfolgenden Beschreibung von Ausführungsbeispielen entnommen werden, wobei auf die beigefügte Zeichnung Bezug genommen wird.

In der Zeichnung zeigen
- Fig. 1: ein erstes Ausführungsbeispiel für ein Handhabungszubehörteil,
- Fig. 2: ein zweites Ausführungsbeispiel für ein Handhabungszubehörteil,
- Fig. 3a,b: ein drittes Ausführungsbeispiel für ein Handhabungszubehörteil,
- Fig. 4: ein viertes Ausführungsbeispiel für ein Handhabungszubehörteil,
- Fig. 5: ein fünftes Ausführungsbeispiel für ein Handhabungszubehörteil,
- Fig. 6: ein sechstes Ausführungsbeispiel für ein Handhabungszubehörteil,
- Fig. 7: ein siebtes Ausführungsbeispiel für ein Handhabungszubehörteil,
- Fig. 8: ein achtes Ausführungsbeispiel für ein Handhabungszubehörteil,
- Fig. 9: ein Ausführungsbeispiel für ein System mit einem Küchengerät und mit einem Handhabungszubehörteil in einer ersten Arbeitsposition und
- Fig. 10: das System aus Fig. 9 mit dem Handhabungszubehörteil in einer weiteren Arbeitsposition.

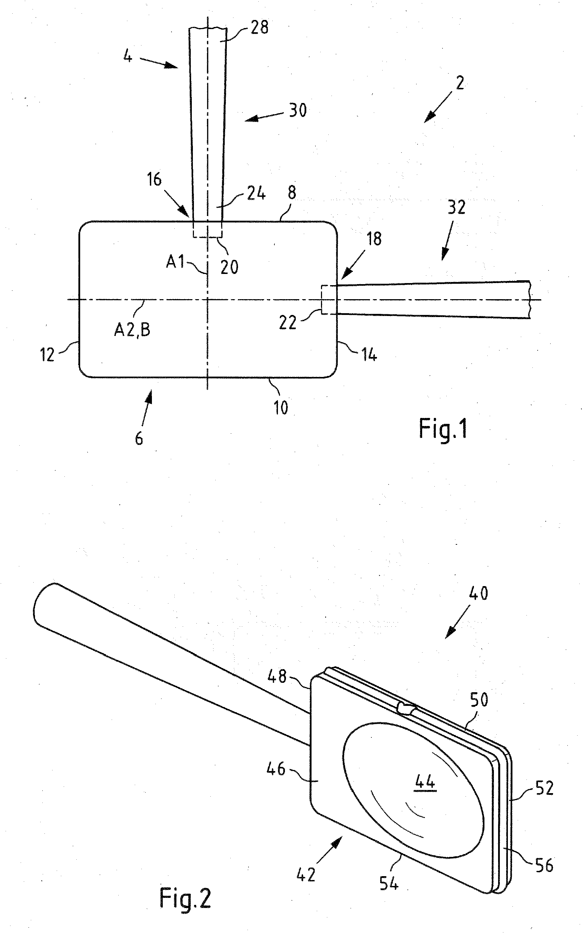

Fig. 1 zeigt ein erstes Ausführungsbeispiel für ein Handhabungszubehörteil 2 für ein Küchengerät mit einem Griffabschnitt 4 und mit einem Arbeitsabschnitt 6. Der Griffabschnitt 4 und der Arbeitsabschnitt 6 weisen jeweils eine Längserstreckungsrichtung auf, die mit den gestrichelten Linien A1 bzw. A2 und B verdeutlicht sind. Der Arbeitsabschnitt 6 ist in seiner Längserstreckungsrichtung B länger, als in der Richtung senkrecht zu seiner Längserstreckungsrichtung B. So weist der Arbeitsabschnitt 6 Außenkanten 8, 10, die in einer Richtung parallel zu Längserstreckungsrichtung B länger sind, als Außenkanten 12, 14, die im Wesentlichen senkrecht zur selben Längserstreckungsrichtung B ausgebildet sind, auf.

Der Griffabschnitt 4 ist über zwei Steckverbindungen 16, 18 mit dem Arbeitsabschnitt 6 verbindbar. Jede Steckverbindung 16, 18 ist durch einen Aufnahmeraum 20, 22 am Arbeitsabschnitt 6 und ein distales Ende 24 des Griffabschnittes 4 ausgebildet. So weist der dargestellte Arbeitsabschnitt 6 zwei Aufnahmeräume 20, 22 auf, deren Innenformgebung an die Außenformgebung eines distalen Endes 24 des Griffabschnittes 4 angepasst ist. Bei dem gezeigten Ausführungsbeispiel dient dasselbe distale Ende 24 des Griffabschnittes 4 für beide Steckverbindungen 16, 18. In einer Alternativausbildung des Handhabungszubehörteils 2 ist auch denkbar, dass unterschiedliche distale Enden 24, 28 des Griffabschnittes 4 für eine lösbare Verbindung mit dem Arbeitsabschnitt 6 einsetzbar sind.

Bei dem vorliegenden Ausführungsbeispiel sind nach Einstecken des Griffabschnittes 4 in den ersten Aufnahmeraum 20 des Arbeitsabschnittes 6 die jeweiligen Längserstreckungsrichtungen A1 und B des Griffabschnittes 4 und des Arbeitsabschnittes 6 senkrecht zueinander angeordnet. So befinden sich der Griffabschnitt 4 und der Arbeitsabschnitt 6 in einer ersten Arbeitsposition 30 relativ zueinander. Durch die längliche Formgebung des Arbeitsabschnittes 6 kann das Handhabungszubehörteil 2 in dieser ersten Arbeitsposition 30 besonders gut in Zusammenhang mit flach ausgebildeten Aufnahmegefäßen eines Küchengeräts, beispielsweise mit einem pfannenartigen Aufnahmegefäß, oder zum Erreichen von Lebensmittelresten auf dem Boden eines Aufnahmegefäßes und unter den Klingeln eines Messeraufsatzes verwendet werden.

Nach Einstecken des Griffabschnittes 4 in den zweiten Aufnahmeraum 22 des Arbeitsabschnittes 6 sind die jeweiligen Längserstreckungsrichtungen A2, B des Griffabschnittes 4 und des Arbeitsabschnittes 6 parallel zueinander angeordnet. So befinden sich der Griffabschnitt 4 und der Arbeitsabschnitt 6 in einer zweiten Arbeitsposition 32 relativ zueinander. In dieser Arbeitsposition 32 sind die längeren Außenkanten 8, 10 des Arbeitsabschnittes 6 im Wesentlichen parallel zur Längserstreckungsrichtung A2 des Griffabschnittes 4 angeordnet und es können beispielsweise Lebensmittelteile von der Innenwand eines tief ausgebildeten Aufnahmegefäßes erreicht werden.

Fig. 2 zeigt ein zweites Ausführungsbeispiel für ein Handhabungszubehörteil 40. Das Handhabungszubehörteil 40 ist ähnlich ausgebildet, wie das Handhabungszubehörteil 2 der Fig. 1 mit der Ausnahme, dass der Arbeitsabschnitt 42 eine Vertiefung 44 aufweist. Dabei ist die Vertiefung 44 an einer Außenseite 46 des Arbeitsabschnittes 42 im Wesentlichen zentriert angeordnet. Außerdem und im Unterschied zum Handhabungszubehörteil 2 der Fig. 1 weist der Arbeitsabschnitt 42 in der Fig. 2 an drei von 4 Außenkanten 48, 50, 52, 54 ein abgestuftes Profil 56 auf.

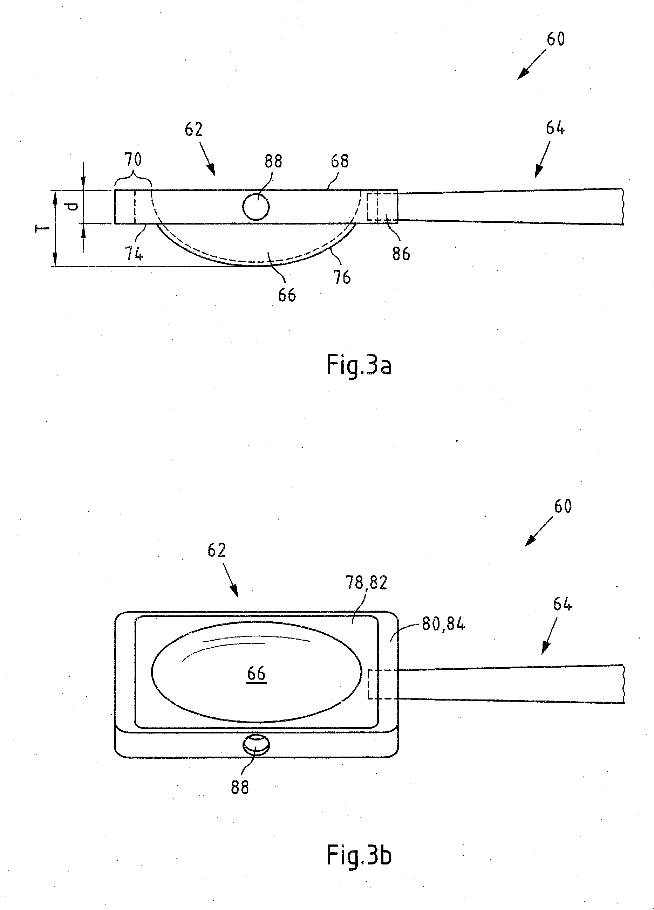

Fig. 3a und Fig. 3b zeigen jeweils dasselbe dritte Ausführungsbeispiel für ein Handhabungszubehörteil 60 mit einem Arbeitsabschnitt 62 und mit einem Griffabschnitt 64, wobei Fig. 3a eine Seitenansicht und Fig. 3b eine perspektivische Ansicht zeigt. Auch hier weist der Arbeitsabschnitt 62 eine Vertiefung 66 auf, die an einer ersten Außenseite 68 des Arbeitsabschnittes 62 im Wesentlichen zentriert angeordnet ist. Der die Vertiefung 66 umgebende Bereich 70 des Arbeitsabschnittes 62 weist eine Dicke d auf, die durch den Abstand zwischen den sich gegenüberliegenden Außenseiten 68, 74 des Arbeitsabschnittes 62 um die Vertiefung 66 herum definiert ist. Die Tiefe T der Vertiefung 66 ist in diesem Ausführungsbeispiel größer als die Dicke d des die Vertiefung 66 umgebenden, im Wesentlichen planen Bereichs 70 des Arbeitsabschnittes 62. Dementsprechend bildet die Vertiefung 66 an der ersten Außenseite 68 des Arbeitsabschnittes 62 eine Wölbung 76 an der gegenüberliegenden Außenseite 74 des Arbeitsabschnittes 62.

Darüber hinaus weist der Arbeitsabschnitt 62 zwei Materialien 78, 80 auf, die sich durch deren Elastizitätseigenschaften unterscheiden. So ist ein erster, mittlerer Bereich 82 aus einem ersten Material 78 mit einem ersten Elastizitätsmodul ausgebildet. Ein zweiter, den mittleren Bereich 82 umgebenden Außenbereich 84 ist wiederum aus einem zweiten, relativ zum ersten Material 78 eher nachgebenden Material 80 ausgebildet. So ist der mittlere Bereich 82 eher steif, während der Außenbereich 84 eher weich ausgebildet ist.

Dabei erstrecken sich die jeweiligen Aufnahmeräume 86, 88 zum Einstecken des Griffabschnittes 64 in den Arbeitsabschnitt 62 bis in den mittleren Bereich 82, um dem Handhabungszubehörteil 60 eine zumindest hinnehmbare mechanische Stabilität zu verleihen.

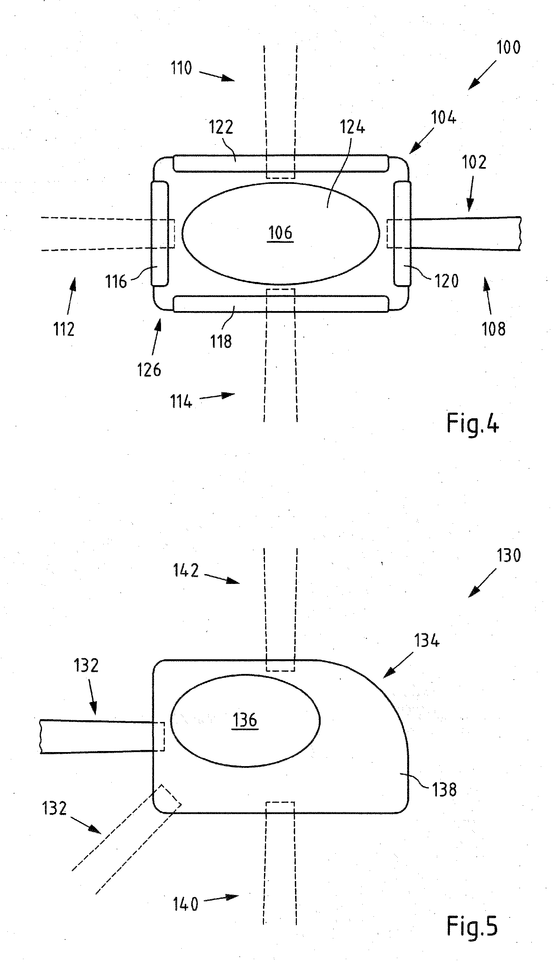

Fig. 4 zeigt ein viertes Ausführungsbeispiel für ein Handhabungszubehörteil 100 mit einem Griffabschnitt 102 und einem Arbeitsabschnitt 104, die lösbar miteinander verbindbar sind, und wobei am Arbeitsabschnitt 104 eine Vertiefung 106 vorgesehen ist. Bei diesem Handhabungszubehörteil sind vier Arbeitspositionen 108, 110, 112, 114 des Griffabschnittes 102 und des Arbeitsabschnittes 104 zueinander vorgesehen.

Der Arbeitsabschnitt 104 weist mehrere Bereiche 116, 118,120,122,124 auf, die sich durch deren jeweiligen Elastizitätseigenschaften unterscheiden, und deren Anordnung am Arbeitsabschnitt 104 in Abhängigkeit von den jeweiligen Arbeitspositionen 108, 110, 112, 114 ausgewählt ist. So ist bei jeder der vier Arbeitspositionen 108, 110, 112, 114 jeweils ein bestimmter Bereich 116, 118, 120, 122, 124 an einem dem Griffabschnitt 102 gegenüberliegenden distalen Ende 126 des Arbeitsabschnittes 104 angeordnet.

Fig. 5 zeigt ein fünftes Ausführungsbeispiel für ein Handhabungszubehörteil 130 mit einem Griffabschnitt 132 und einem Arbeitsabschnitt 134, die lösbar miteinander verbindbar sind. Am Arbeitsabschnitt 134 ist eine Vertiefung 136 vorgesehen, die an einer Außenseite 138 des Arbeitsabschnittes 134 im Wesentlichen exzentrisch angeordnet ist. Je nach Arbeitsposition (140 oder 142) ist das Handhabungszubehörteil 130 für ein Abschöpfen von Flüssigkeiten nah am Boden eines Aufnahmegefäßes oder eben entfernt davon.

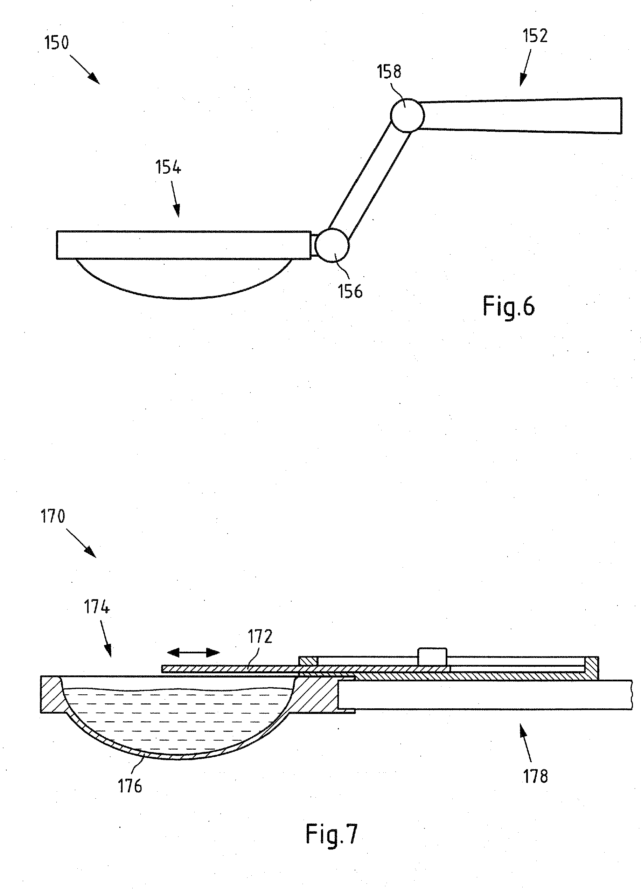

Fig. 6 zeigt ein fünftes Ausführungsbeispiel für ein Handhabungszubehörteil 150, wobei der Griffabschnitt 152 und der Arbeitsabschnitt 154 über eine Schwenkverbindung 156 schwenkbar miteinander verbunden sind, und wobei der Griffabschnitt 152 einen Gelenkabschnitt 158 aufweist.

Fig. 7 zeigt ein siebtes Ausführungsbeispiel für ein Handhabungszubehörteil 170, wobei ein Abdeckungselement 172 zur Abdeckung einer am Arbeitsabschnitt 174 zentriert angeordneten Vertiefung 176 am Griffabschnitt 178 vorgesehen ist. Der Arbeitsabschnitt 174 ist symmetrisch ausgebildet, so dass das Abdeckungselement 172 bei unterschiedlichen Arbeitspositionen die Vertiefung abdeckt.

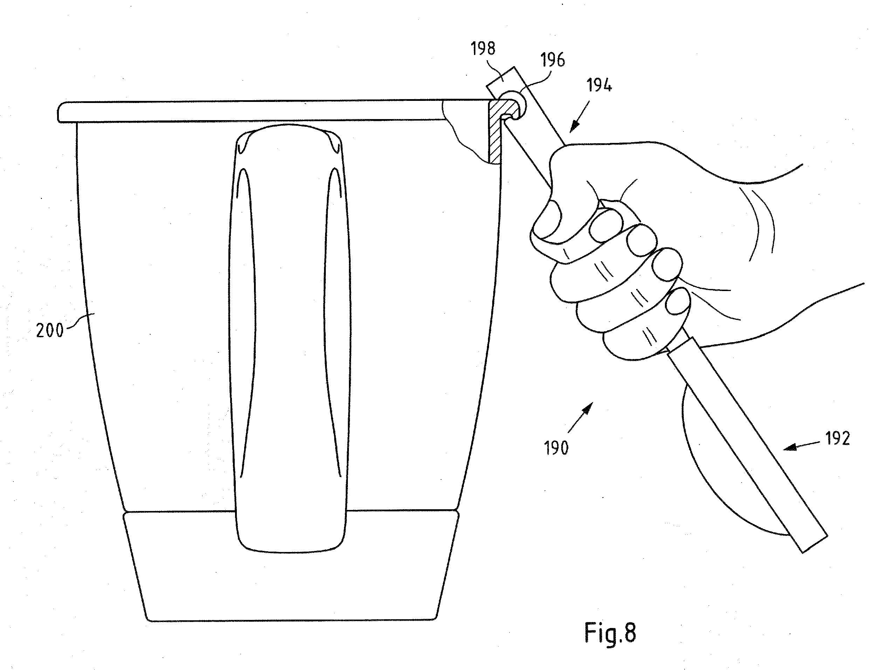

Fig. 8 zeigt ein achtes Ausführungsbeispiel für ein Handhabungszubehörteil 190 mit einem Arbeitsabschnitt 192 und mit einem Griffabschnitt 194. Der Griffabschnitt 194 weist ein Verbindungselement 196 an einem seiner distalen Enden 198 auf, das für eine Verbindung mit einem Aufnahmegefäß 200 oder mit einem Zubehörteil eines Küchengeräts vorgesehen ist.

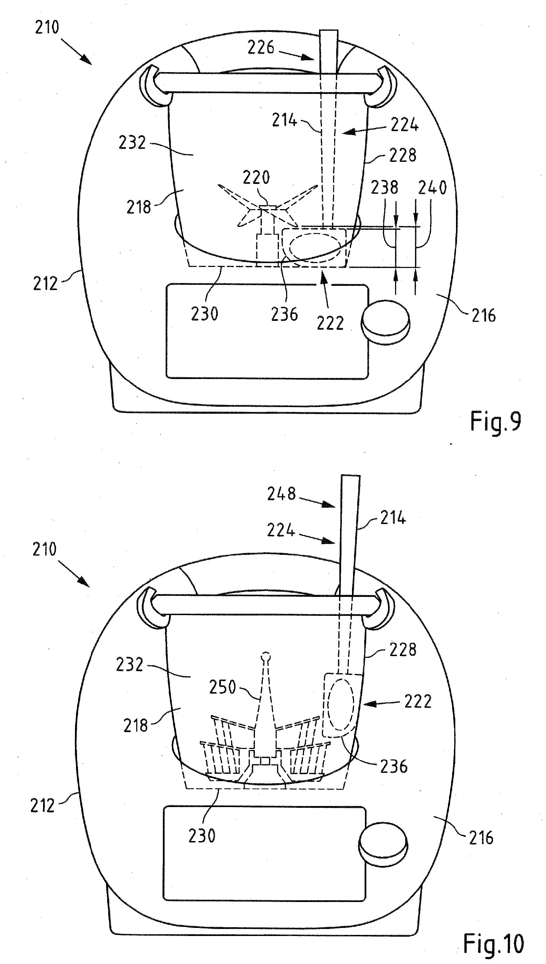

Fig. 9 zeigt ein Ausführungsbeispiel für ein System 210 mit einem Küchengerät 212 und mit einem Handhabungszubehörteil 214. Das Küchengerät 212 weist ein Grundgerät 216, ein Aufnahmegefäß 218 und eine Schneideeinheit 220 auf. Das Handhabungszubehörteil 214 weist einen Arbeitsabschnitt 222 und einen Griffabschnitt 224 auf, die lösbar miteinander verbindbar sind, und die hier in einer ersten Arbeitsposition 226 dargestellt sind.

Das Aufnahmegefäß 218 weist eine Innenwand 228 auf, die gebogen ist, und einen flachen Boden 230. Zusammen mit der in dem Aufnahmegefäß 218 montierten Schneideeinheit 220 bilden diese Innenwand 228 und der Boden 230 des Aufnahmegefäßes 218 einen Innenraum 232. Der Arbeitsabschnitt 222 des Handhabungszubehörteils 214 weist eine Außenkante 236 auf, die entsprechend der Formgebung des Bodens 230 des Aufnahmegefäßes 218 ausgebildet ist, und eine Breite 238, die geringer ist, als der Abstand 240 zwischen der Schneideeinheit 220 und dem Boden 230 des Aufnahmegefäßes 218.

In der dargestellten ersten Arbeitsposition eignet sich das Handhabungszubehörteil 214 für ein Erreichen von Lebensmitteln auf dem Boden 230 des Aufnahmegefäßes 218, wenn die Schneideeinheit 220 montiert ist.

Fig. 10 zeigt das System aus der Fig. 9, wobei das Handhabungszubehörteil 214 in einer weiteren Arbeitsposition 248 eingestellt und eine Rühreinheit 250 anstatt eine Schneideeinheit 220 montiert ist. In dieser Arbeitsposition kann ein Teig oder ein Lebensmittel von der Innenwand 228 des Aufnahmegefäßes 218 abgeschabt werden.

## Patentansprüche

1. Handhabungszubehörteil (2, 40, 60, 100, 130, 150, 170, 190, 214) für ein Küchengerät (212)
- mit einem Griffabschnitt (4, 64, 102, 132, 152, 178, 194, 224) und
- mit einem Arbeitsabschnitt (6, 42, 62, 104, 134, 154, 174, 192, 222),
- wobei der Griffabschnitt (4, 64, 102, 132, 152, 178, 194, 224) und der Arbeitsabschnitt (6, 42, 62, 104, 134, 154, 174, 192, 222) jeweils eine Längserstreckungsrichtung (A1, A2, B) aufweisen,
**dadurch gekennzeichnet,**
- **dass** der Griffabschnitt (4, 64, 102, 132, 152, 178, 194, 224) gegenüber dem Arbeitsabschnitt (6, 42, 62, 104, 134, 154, 174, 192, 222) in mindestens zwei unterschiedliche Arbeitspositionen (30, 32, 108, 110, 112, 114, 140, 142, 226, 248) verstellbar ist, wobei jede Arbeitsposition (30, 32, 108, 110, 112, 114, 140, 142, 226, 248) durch eine Ausrichtung der jeweiligen Längserstreckungsrichtungen (A1, A2, B) des Griffabschnittes (4, 64, 102, 132, 152, 178, 194, 224) und des Arbeitsabschnittes (6, 42, 62, 104, 134, 154, 174, 192, 222) zueinander definiert ist.

2. Handhabungszubehörteil (2, 40, 60, 100, 130, 150, 170, 190, 214) nach Anspruch 1,
**dadurch gekennzeichnet,**
**dass** der Griffabschnitt (4, 64, 102, 132, 152, 178, 194, 224) und der Arbeitsabschnitt (6, 42, 62, 104, 134, 154, 174, 192, 222) lösbar miteinander verbindbar sind.

3. Handhabungszubehörteil (2, 40, 60,100,130, 150, 170, 190, 214) nach Anspruch 1 oder 2,
**dadurch gekennzeichnet,**
- **dass** der Griffabschnitt (4, 64, 102, 132, 152, 178, 194, 224) und der Arbeitsabschnitt (6, 42, 62, 104, 134, 154, 174, 192, 222) schwenkbar miteinander verbunden sind, und /oder
- **dass** der Griffabschnitt (4, 64, 102, 132, 152, 178, 194, 224) mindestens einen Gelenkabschnitt (158) aufweist.

4. Handhabungszubehörteil (2, 40, 60, 100, 130, 150, 170, 190, 214) nach einem der Ansprüche 1 bis 3,
**dadurch gekennzeichnet,**
**dass** der Arbeitsabschnitt (6, 42, 62, 104, 134, 154, 174, 192, 222) eine Vertiefung (44, 66,106,136,176) aufweist, wobei die Vertiefung (44, 66, 106, 136, 176) an einer Außenseite (46, 68, 74, 138) des Arbeitsabschnittes (6, 42, 62, 104, 134, 154, 174, 192, 222) im Wesentlichen zentriert angeordnet ist.

5. Handhabungszubehörteil (2, 40, 60, 100, 130, 150, 170, 190, 214) nach einem der Ansprüche 1 bis 3,
**dadurch gekennzeichnet,**
**dass** der Arbeitsabschnitt (6, 42, 62, 104, 134, 154, 174, 192, 222) eine Vertiefung (44, 66, 106, 136, 176) aufweist, wobei die Vertiefung (44, 66, 106, 136, 176) an einer Außenseite (46, 68, 74,138) des Arbeitsabschnittes (6, 42, 62, 104, 134, 154, 174, 192, 222) im Wesentlichen exzentrisch angeordnet ist.

6. Handhabungszubehörteil (2, 40, 60, 100, 130, 150, 170, 190, 214) nach einem der Ansprüche 1 bis 5,
**dadurch gekennzeichnet,**
**dass** der Arbeitsabschnitt (6, 42, 62, 104, 134, 154, 174, 192, 222) mindestens zwei Bereiche (70, 82, 84, 116,118,120,122,124) aufweist, die sich durch deren jeweiligen Elastizitätseigenschaften unterscheiden.

7. Handhabungszubehörteil (2, 40, 60, 100, 130, 150, 170, 190, 214) nach einem der Ansprüche 1 bis 6,
**dadurch gekennzeichnet,**
- **dass** der Arbeitsabschnitt (6, 42, 62, 104, 134, 154, 174, 192, 222) mindestens eine Außenkante (8, 10, 12, 14, 48, 50, 52, 54, 236) aufweist,
- **dass** ein Bereich (70, 82, 84, 116, 118, 120, 122, 124) mit einem ersten Elastizitätsmodul an der mindestens einen Außenkante (8, 10, 12, 14, 48, 50, 52, 54, 236) angeordnet ist, und
- **dass** ein Bereich (70, 82, 84, 116, 118, 120, 122, 124) mit einem weiteren ersten Elastizitätsmodul fern von der mindestens einen Außenkante (8,10,12,14,48, 50, 52, 54, 236) angeordnet ist,
- wobei der erste Elastizitätsmodul geringer als der weitere Elastizitätsmodul ist.

8. Handhabungszubehörteil (2, 40, 60, 100, 130, 150, 170, 190, 214) nach Anspruch 6 oder 7,
**dadurch gekennzeichnet,**
**dass** die Anordnung am Arbeitsabschnitt (6, 42, 62,104,134,154, 174, 192, 222) der mindestens zwei Bereiche (70, 82, 84, 116, 118,120,122,124) in Abhängigkeit von einer Arbeitsposition (30, 32, 108, 110, 112, 114, 140, 142, 226, 248) des Griffabschnittes (4, 64, 102, 132, 152, 178, 194, 224) und des Arbeitsabschnittes (6, 42, 62, 104, 134, 154, 174, 192, 222) ausgewählt ist.

9. Handhabungszubehörteil (2, 40, 60,100,130,150,170,190, 214) nach einem der Ansprüche 6 bis 8,
**dadurch gekennzeichnet,**
- **dass** der Arbeitsabschnitt (6, 42, 62, 104, 134, 154, 174, 192, 222) einen ersten Bereich (70, 82, 84, 116, 118, 120, 122, 124) mit einem ersten Elastizitätsmodul und einen weiteren Bereich (70, 82, 84, 116, 118, 120, 122, 124) mit einem weiteren, im Vergleich zum ersten Elastizitätsmodul höheren Elastizitätsmodul aufweist, und
- **dass** in einer vorbestimmten Arbeitsposition (30, 32, 108, 110, 112, 114, 140, 142, 226, 248) der erste Bereich (70, 82, 84, 116, 118, 120, 122,124) an einem dem Griffabschnitt (4, 64, 102, 132, 152, 178, 194, 224) gegenüberliegenden distalen Ende (126) des Arbeitsabschnittes (6, 42, 62,104,134,154,174,192, 222) angeordnet ist.

10. Handhabungszubehörteil (2, 40, 60, 100, 130, 150, 170, 190, 214) nach einem der Ansprüche 1 bis 9,
**dadurch gekennzeichnet,**
**dass** der Arbeitsabschnitt (6, 42, 62, 104, 134, 154, 174, 192, 222) zumindest teilweise ein Material aufweist, dessen Farbgebung temperaturabhängig ist.

11. System (210)
- mit einem Küchengerät (212) und
- mit einem Handhabungszubehörteil (2, 40, 60, 100, 130, 150, 170,190, 214) nach einem der Ansprüche 1 bis 10,
**dadurch gekennzeichnet,**
- **dass** die Arbeitspositionen (30, 32, 108, 110, 112, 114, 140, 248), in denen das Handhabungszubehörteil (2, 40, 60, 100, 130, 150, 170, 190, 214) einstellbar ist, jeweils für mindestens eine Funktion des Küchengerätes (212) vorgesehen sind,
- wobei eine Funktion des Küchengerätes (212) anhand eines Bauteils des Küchengerätes (212), eines Zubehörteils (220, 250) des Küchengerätes (212) und/oder eines vorbestimmten Vorgangs am Küchengerät (212) definiert ist.

12. System (210) nach Anspruch 11,
**dadurch gekennzeichnet,**
**dass** die Formgebung des Arbeitsabschnittes (6, 42, 62, 104, 134, 154, 174, 192, 222) des Handhabungszubehörteils (2, 40, 60, 100, 130, 150, 170, 190, 214) zumindest teilweise an die Formgebung eines Aufnahmegefäßes (200, 218) des Küchengeräts (212) angepasst ist.

13. System (210) nach Anspruch 11 oder 12,
**dadurch gekennzeichnet,**
**dass** ein Innenraum (232) des Küchengeräts (212) anteilig jeweils durch eine Innenfläche eines Aufnahmegefäßes (200, 218) und durch eine Außenfläche eines Zubehörteils (220, 250) ausgebildet ist, und
- **dass** die Formgebung des Arbeitsabschnittes (6, 42, 62, 104, 134, 154, 174, 192, 222) des Handhabungszubehörteils (2, 40, 60, 100, 130, 150, 170, 190, 214) zumindest teilweise an die Formgebung des Innenraums (232) angepasst ist.

14. Verwendung eines Handhabungszubehörteils (2, 40, 60, 100, 130, 150, 170, 190, 214) nach einem der Ansprüche 1 bis 10 zusammen mit einem Küchengerät (212),
**dadurch gekennzeichnet,**
**dass** für die Durchführung eines Lebensmittelzubereitungsvorgangs am Küchengerät (212) die Arbeitsposition (30, 32, 108, 110, 112, 114, 140, 142, 226, 248) des Handhabungszubehörteils (2, 40, 60, 100,130, 150,170,190, 214) an eine Funktion des Küchengerätes (212) angepasst wird.
